# EUROPÄISCHE PATENTSCHRIFT

(11) **EP 0 995 718 B1**
(45) Veröffentlichungstag und Bekanntmachung des Hinweises auf die Patenterteilung: **06.11.2002**
(21) Anmeldenummer: 99118228.8
(22) Anmeldetag: 14.09.1999
(51) Int. Cl.: C01B 33/18, C01B 13/20, B01J 19/24, B01J 19/26, B01J 12/02, D21H 17/69

(54) **Mittels Aerosol dotiertes pyrogen hergestelltes Siliciumdioxid**
Alumina doped silica prepared pyrogenically using an aerosol
Silica pyrogénique dopée au moyen d'un aérosol

(30) Priorität: 14.10.1998 DE 19847161
(43) Veröffentlichungstag der Anmeldung: 26.04.2000
(73) Patentinhaber: Degussa AG, 40474 Düsseldorf (DE); Nippon Aerosil Co., Ltd., Shinjuku-ku, Tokyo 163-0913 (JP)
(72) Erfinder: Mangold, Helmut, Dr., 63517 Rodenbach (DE); Ochiai, Mitsuro, Hasuda City, Saitama 349-01 (JP); Glaum, Holger, Dr., 63477 Maintal-Wachenbuchen (DE); Müller, Astrid, 63776 Mömbris (DE)

(56) Entgegenhaltungen:
- EP-A- 0 327 815
- EP-A- 0 850 876
- CH-A- 381 205
- NL-C- 95 381
- US-A- 4 292 290

## Beschreibung

Die Erfindung betrifft mittels Aerosol mit Aluminiumoxid dotiertes pyrogen hergestelltes Siliciumdioxid, das sich sehr leicht in polaren Medien dispergieren läßt, sowie ein Verfahren zu seiner Herstellung, sowie seine Verwendung bei der Papierherstellung, insbesondere in Ink-jet Papier und in Ink-Jet-Folie. Weiterhin betrifft sie seine Verwendung zur Herstellung von Dispersionen niedriger Viskosität beziehungsweise zur Herstellung hochgefüllter Dispersionen.

Für den Einsatz in der Papierindustrie werden extrem leicht dispergierbare Füllstoffe, die zum Beispiel in Ink-Jet-Papier oder Ink-Jet-Folie die Tinte gut absorbieren und die Brillianz der Farben erhalten, benötigt.

Es ist bekannt pyrogen hergestellte Kieselsäure mit einem speziellen Verfahren in einem Schritt in der Flamme zu dotieren (DE 196 50 500 A1, EP-A 0 850 876). Dabei handelt es sich um eine Kombination einer Hochtemperaturflammenhydrolyse mit einer Pyrolyse. Von diesem Dotierverfahren zu unterscheiden ist das ältere sogenannte "co-fumed-Verfahren", bei der die gasförmigen Ausgangs-produkte (beispielsweise SiCl₄-Gas und AlCl₃-Gas) vorgemischt werden und gemeinsam in einem Flammenreaktor verbrannt werden, wobei pyrogen hergestellte Mischoxide entstehen.

Die nach den beiden verschiedenen Verfahren hergestellten Produkte zeigen deutlich unterschiedliche anwendungstechnische Eigenschaften.

Bei dem erfindungsgemäß verwendeten Dotierverfahren wird in eine Flamme, in der ein Oxid pyrogen durch Flammenhydrolyse erzeugt wird, ein Aerosol eingespeist, wobei sich in diesem Aerosol ein Salz der zu dotierenden Verbindung befindet.

Es wurde nun gefunden, daß bei Verwendung von in Wasser gelösten Aluminiumverbindungen als Ausgangsprodukt für das einzuspeisende Aerosol eine mit Aluminiumoxid dotierte pyrogen hergestellte Kieselsäure als Produkt anfällt, die sich extrem gut in polaren Medien, wie Wasser, dispergieren läßt, und sich sehr gut zum Einsatz in Ink-Jet-Papier und Folie eignet.

Gegenstand der Erfindung ist eine mittels Aerosol mit Aluminiumoxid dotierte pyrogen hergestellte Kieselsäure, welche dadurch gekennzeichnet ist, daß die Basiskomponente eine pyrogen nach Art der Flammenoxidation oder bevorzugt, der Flammenhydrolyse, hergestellte Kieselsäure ist, die mit einer Dotierungskomponente von 1·10⁻⁴ und bis 20 Gew.% dotiert ist, wobei die Dotierungsmenge vorzugsweise im Bereich von 1 bis 10.000 ppm liegt und die Dotierungskomponente ein Salz oder eine Salzmischung des Aluminiums oder eine Suspension einer Aluminiumverbindung oder metallischen Aluminiums oder Mischungen davon ist, wobei die BET-Oberfläche des dotierten Oxides zwischen 5 und 600 m²/g, bevorzugt im Bereich zwischen 40 und 100 m²/g, liegt.

Die erfindungsgemäße Kieselsäure kann eine DBP-Zahl von unter 100g/100g aufweisen.

Ein weiterer Gegenstand der Erfindung ist ein Verfahren zur Herstellung der mittels Aerosol mit Aluminiumoxid dotierten pyrogen hergestellten Kieselsäuren, welches dadurch gekennzeichnet ist, daß man in eine Flamme, wie sie zur pyrogenen Herstellung von Kieselsäure nach der Art der Flammenoxidation oder bevorzugt der Flammenhydrolyse benutzt wird, ein Aerosol einspeist, das Aerosol vor der Reaktion mit dem Gasgemisch der Flammenoxidation beziehungsweise Flammenhydrolyse homogen mischt, dann das Aerosol-Gasgemisch in der Flamme abreagieren läßt und die entstandenen mit-Aluminiumoxid dotierten pyrogen hergestellten Kieselsäuren in bekannter Weise vom Gasstrom abtrennt, wobei zur Herstellung des Aerosols eine wäßrige Lösung dient, die Salze oder Salzmischungen des Aluminiums oder das Metall selbst in gelöster oder suspendierter Form oder Mischungen davon enthält, wobei das Aerosol durch Vernebelung mittels einer Zweistoffdüse oder durch eine andere Art der Aerosolherstellung, vorzugsweise durch einen Aerosolgenerator nach der Ultraschallvernebelung, hergestellt wird.

Als Salze können eingesetzt werden: AlCl₃, Al₂(SO₄)₃, Al(NO₃)₃.

Die Verfahren der Flammenhydrolyse zur Herstellung von pyrogenen Oxiden so auch zur Herstellung von Siliciumdioxid (Kieselsäure) sind aus Ullmanns Enzyklopädie der technischen Chemie, 4. Auflage, Band 21, Seite 464 bekannt.

Ein weiterer Gegenstand der Erfindung ist die Verwendung der mittels Aerosol dotierten pyrogen hergestellten Kieselsäure als Füllstoff insbesondere in der Papierindustrie bei der Herstellung von Ink-Jet-Papier und Ink-Jet-Folie oder sonstige Ink-Jet-Materialien, wie zum Beispiel Leinwände, Kunststoff-Folien etc., als Trägermaterial, als katalytisch aktive Substanz, als Ausgangsmaterial zur Herstellung von Dispersionen, als Poliermittel (CMP-Anwendungen), als keramischen Grundstoff, in der Elektronikindustrie, als Füllstoff für Polymere, als Ausgangsstoff zur Herstellung von Glas oder Glasbeschichtungen oder Glasfasern, als Trennhilfsmittel auch bei hohen Temperaturen, in der Kosmetikindustrie, als Absorbermaterial, als Additiv in der Silikon- und Kautschukindustrie, zur Einstellung der Rheologie von flüssigen Systemen, zur Hitzeschutzstabilisierung, als Wärmedämmaterial, als Fließhilfsmittel, als Füllstoff in der Dentalindustrie, als Hilfsmittel in der pharmazeutischen Industrie, in der Lackindustrie, bei PET-Film-Anwendungen, in Fluoreszenz-Röhren, als Ausgangsstoff zur Herstellung von Filterkeramik oder Filtern.

Ein weiterer Gegenstand der Erfindung sind Abmischungen von 0,1 bis 100 Prozent der erfindungsgemäßen Kieselsäuren mit anderen pyrogen hergestellten oder gefällten Kieselsäuren oder Bentoniten oder anderen in der Papierindustrie üblichen Füllstoffen oder Mischungen dieser Füllstoffe.

Die erfindungsgemäße Kieselsäure, die beispielsweise bei Verwendung von in Wasser gelösten Aluminiumchloridsalzen für die Herstellung des einzuspeisenden Aerosols als Produkt erhalten wird, läßt sich extrem gut in polaren Medien, wie z. B. Wasser, dispergieren. Sie ist daher für den Einsatz bei der Herstellung Ink-Jet-Papier und Ink-Jet-Folien geeignet. Es ist möglich, mit dem in Wasser dispergierten, dotierten pyrogen hergestellten Siliciumdioxid transparente oder glänzende Beschichtungen auf Ink-Jet-Medien, wie Papier oder Folie, aufzubringen.

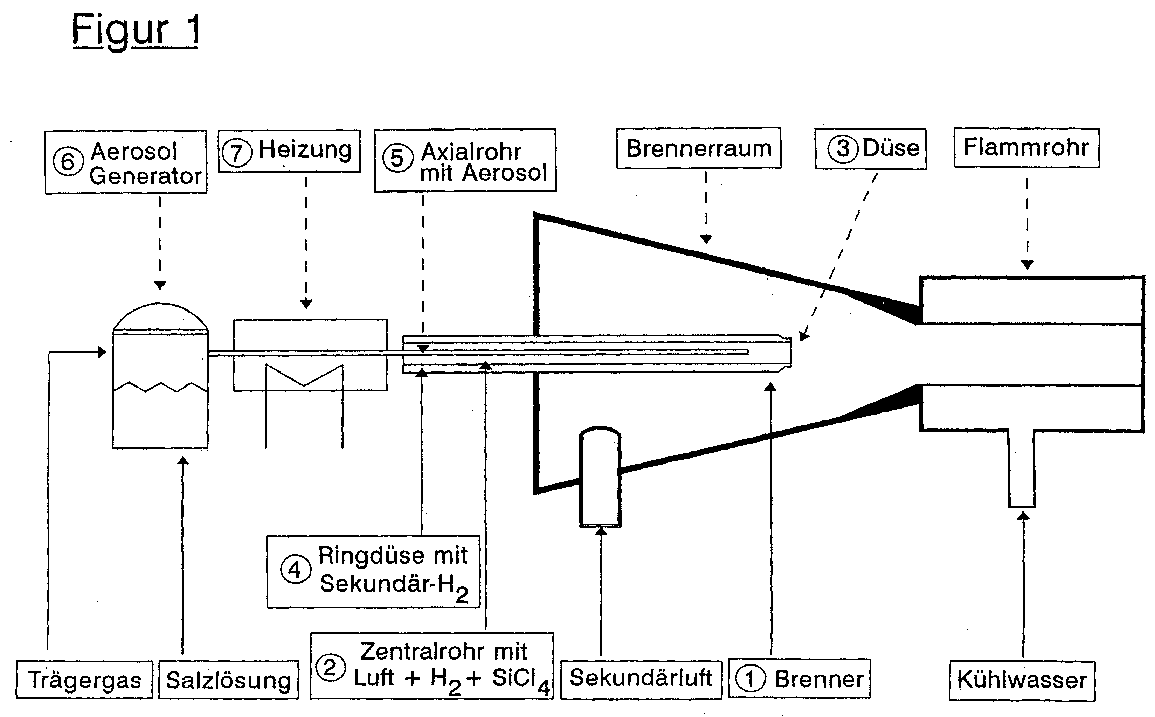

Das erfindungsgemäße Siliciumdioxid und das Verfahren zu seiner Herstellung sowie seine Verwendung werden anhand der Figur 1 und der folgenden Beispiele näher erläutert und beschrieben:

Figur 1 zeigt eine schematische Darstellung der Dotierungsapparatur. Kernstück der Apparatur ist ein Brenner bekannter Bauart zur Herstellung von pyrogenen Oxiden.

Der Brenner 1 besteht aus dem Zentralrohr 2 , das in die Düse 3 mündet, aus welcher der Hauptgasstrom in den Brennerraum strömt und dort abbrennt. Die Düse 3 ist von der Ringdüse 4 umgeben, aus der (Ring oder Sekundär-) Wasserstoff ausströmt.

In dem Zentralrohr 2 befindet sich das Axialrohr 5, das einige Zentimeter vor der Düse des Zentralrohrs 2 endet. In das Axialrohr 5 wird das Aerosol eingespeist.

Das Aerosol, das aus einer wäßrigen Aluminiumchloridlösung besteht, wird in dem Aerosol-Generator 6 (Ultraschallvernebler) erzeugt.

Das in dem Aerosol-Generator 6 erzeugte Aluminiumchlorid-Wasser-Aerosol wird mittels eines leichten Traggasstromes durch die Heizzone 7 geleitet, in der das mitgeführte Wasser verdampft, wobei in der Gasphase kleine Salzkristalle in feinverteilter Form zurückbleiben.

### Beispiel 1

### Herstellung einer mittels Aerosol mit Aluminiumoxid dotierten pyrogen hergestellten Kieselsäure mit niedriger BET-Oberfläche

5,25 kg/h SiCl₄ werden bei ca. 130 °C verdampft und in das Zentralrohr 2 des Brenners 1 überführt. In das Zentralrohr 2 werden zusätzlich 3,47 Nm³/h (Primär-) Wasserstoff und 3,76 Nm³/h Luft eingespeist. Zusätzlich werden in dieses Gemisch 0,95 Nm³/h Sauerstoff zugegeben.

Das Gasgemisch strömt aus der Düse 3 des Brenners 1 und brennt in den Brennerraum und das daran anschließende wassergekühlte Flammrohr.

In die Ringdüse 4 werden 0,5 Nm³/h (Mantel oder Sekundär-) Wasserstoff sowie 0,3 Nm³/h Stickstoff eingespeist.

In den Brennerraum werden noch zusätzlich 20 Nm³/h (Sekundär-)Luft eingespeist.

Aus dem Axialrohr 5 strömt der zweite Gasstrom in das Zentralrohr 2.

Der zweite Gasstrom besteht aus dem Aerosol, das durch Ultraschallvernebelung von AlCl₃-Lösung in dem Aerosolgenerator 6 erzeugt wird. Der Aerosolgenerator 6 vernebelt dabei 460 g/h 2,29-prozentige wäßrige Aluminiumtrichloridlösung. Das Aluminiumchloridaerosol wird mit Hilfe des Traggases von 0,5 Nm³/h Luft durch die geheizte Leitung geführt, wobei das wäßrige Aerosol bei Temperaturen um ca. 180 °C in ein Gas und ein Salzkristall-Aerosol übergeht.

Am Brennermund beträgt die Temperatür des Gasgemisches (SiCl₄-Luft-Wasserstoff, Wasser-Aerosol) 156 °C.

Die Reaktionsgase und die mittels Aerosol mit Aluminiumoxid dotierte pyrogene Kieselsäure werden durch Anlegen eines Unterdruckes durch das Kühlsystem gesaugt. Dabei wird der Partikel-Gasstrom auf ca. 100 bis 160 °C abgekühlt. In einem Zyklon wird der Feststoff von dem Abgasstrom abgetrennt.

Die mittels Aerosol mit Aluminiumoxid dotierte pyrogen hergestellte Kieselsäure fällt als weißes feinteiliges Pulver an.

In einem weiteren Schritt werden bei erhöhter Temperatur durch Behandlung mit wasserdampfhaltiger Luft noch anhaftende Salzsäurereste von der Kieselsäure entfernt.

Die BET-Oberfläche der mit Aluminiumoxid dotierten pyrogenen Kieselsäure beträgt 55 m²/g.

Die Herstellbedingungen sind in Tabelle 1 zusammengefaßt. Weitere analytische Daten der erfindungsgemäßen Kieselsäure werden in Tabelle 2 angegeben.

### Beispiel 2

### Herstellung einer mittels Aerosol mit Aluminiumoxid dotierten pyrogen hergestellten Kieselsäure mit hoher BET-Oberfläche

4,44 kg/h SiCl₄ werden bei ca. 130 °C verdampft und in das Zentralrohr 2 des Brenners 1 bekannter Bauart überführt. In das Zentralrohr 2 werden zusätzlich 3,15 Nm³/h (Primär-) Wasserstoff und 8,2 Nm³/h Luft eingespeist.

Das Gasgemisch strömt aus der Düse 3 des Brenners 1 und brennt in den Brennerraum und das daran anschließende wassergekühlte Flammrohr.

In die Ringdüse 4 werden 0,5 Nm³/h (Mantel oder Sekundär-) Wasserstoff und 0,3 Nm³/h Stickstoff eingespeist.

In den Brennerraum werden noch zusätzlich 12 Nm³/h (Sekundär-)Luft eingespeist.

Aus dem Axialrohr 5 strömt der zweite Gasstrom in das Zentralrohr 2.

Der zweite Gasstrom besteht aus dem Aerosol, das durch Ultraschallvernebelung von AlCl₃-Lösung in der separaten Vernebelungseinheit 6 erzeugt wird. Der Aerosolgenerator 6 vernebelt dabei 450 g/h 2,29-prozentige wäßrige Aluminiumtrichloridlösung. Das Aluminiumchloridaerosol wird mit Hilfe des Traggases von 0,5 Nm³/h Luft durch die geheizte Leitung geführt, wobei das wäßrige Aerosol bei Temperaturen um ca. 180 °C in ein Gas und ein Salzkristall-Aerosol übergeht.

Am Brennermund beträgt die Temperatur des Gasgemisches (SiCl₄-Luft-Wasserstoff, Wasser-Aerosol) 180 °C.

Die Reaktionsgase und die mittels Aerosol mit Aluminiumoxid dotierte pyrogen hergestellte Kieselsäure werden durch Anlegen eines Unterdruckes durch ein Kühlsystem gesaugt. Dabei wird der Partikel-Gasstrom auf ca. 100 bis 160 °C abgekühlt. In einem Zyklon wird der Feststoff von dem Abgasstrom abgetrennt.

Die mittels Aerosol mit Aluminiumoxid dotierte pyrogen hergestellte Kieselsäure fällt als weißes feinteiliges Pulver an. In einem weiteren Schritt werden bei erhöhter Temperatur durch Behandlung mit wasserdampfhaltiger Luft noch anhaftende Salzsäurereste von der Kieselsäure entfernt.

Die BET-Oberfläche der mittels Aerosol mit Aluminiumoxid dotierten pyrogenen Kieselsäure beträgt 203 m²/g.

Die Herstellbedingungen sind in Tabelle 1 aufgeführt. Weitere analytische Daten der erfindungsgemäßen Kieselsäure werden in Tabelle 2 angegeben.

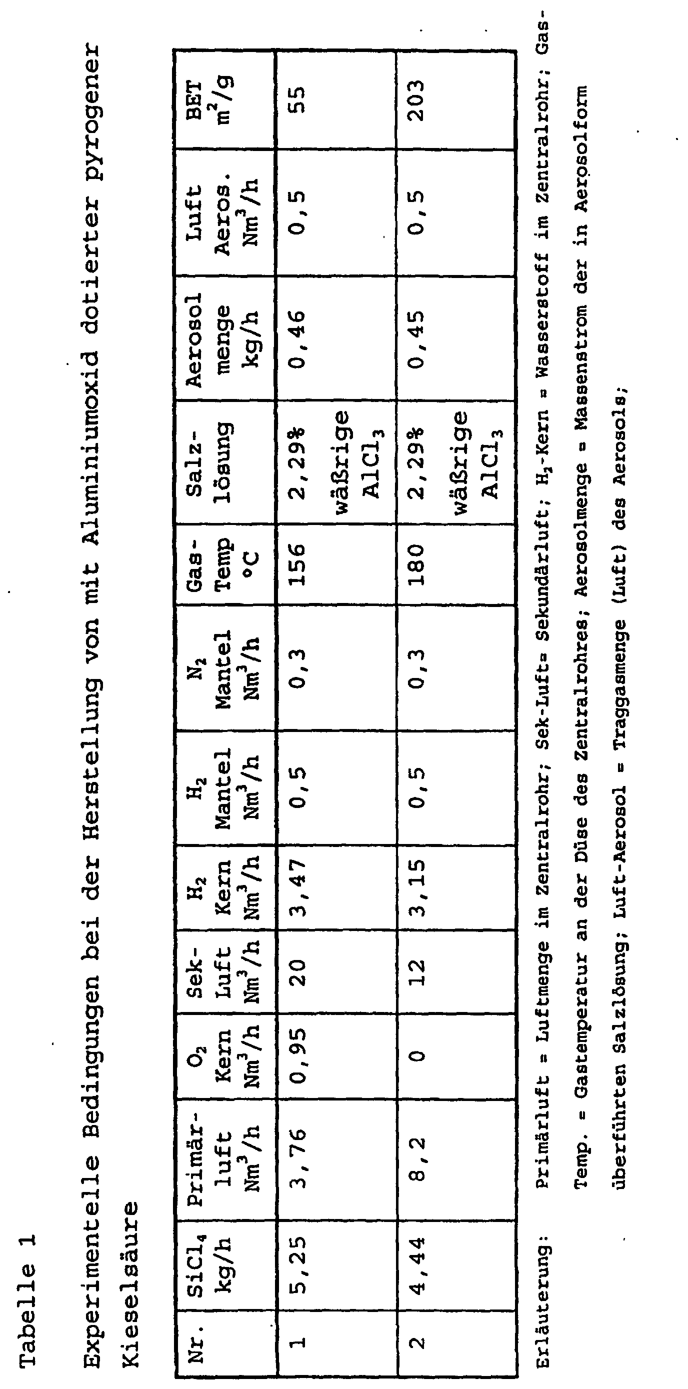

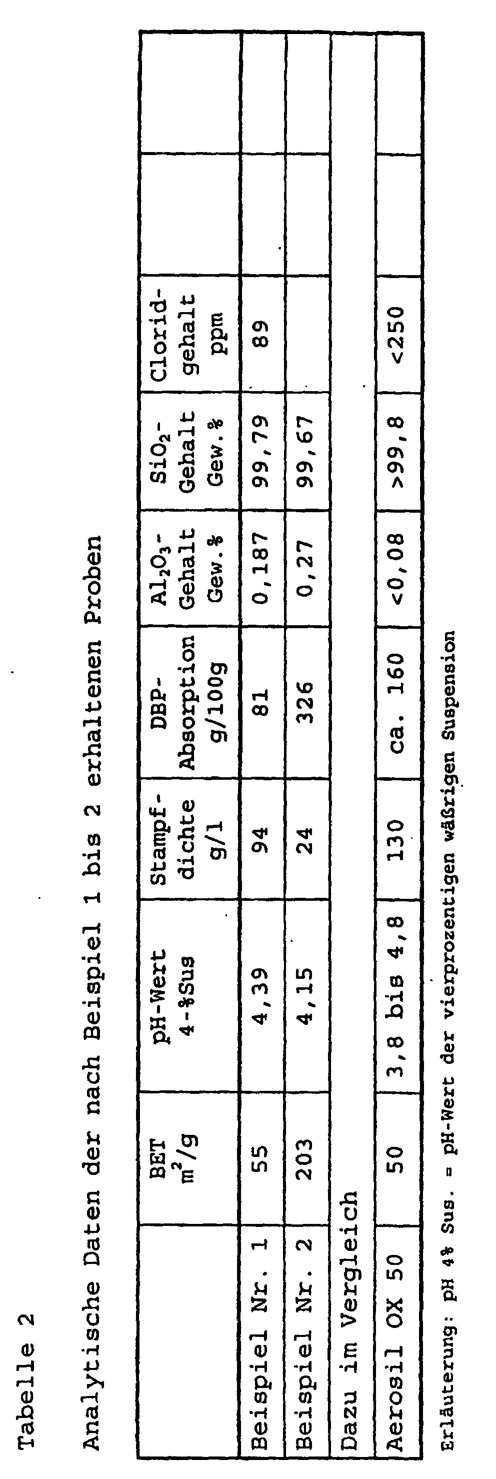

### EM-Aufnahme:

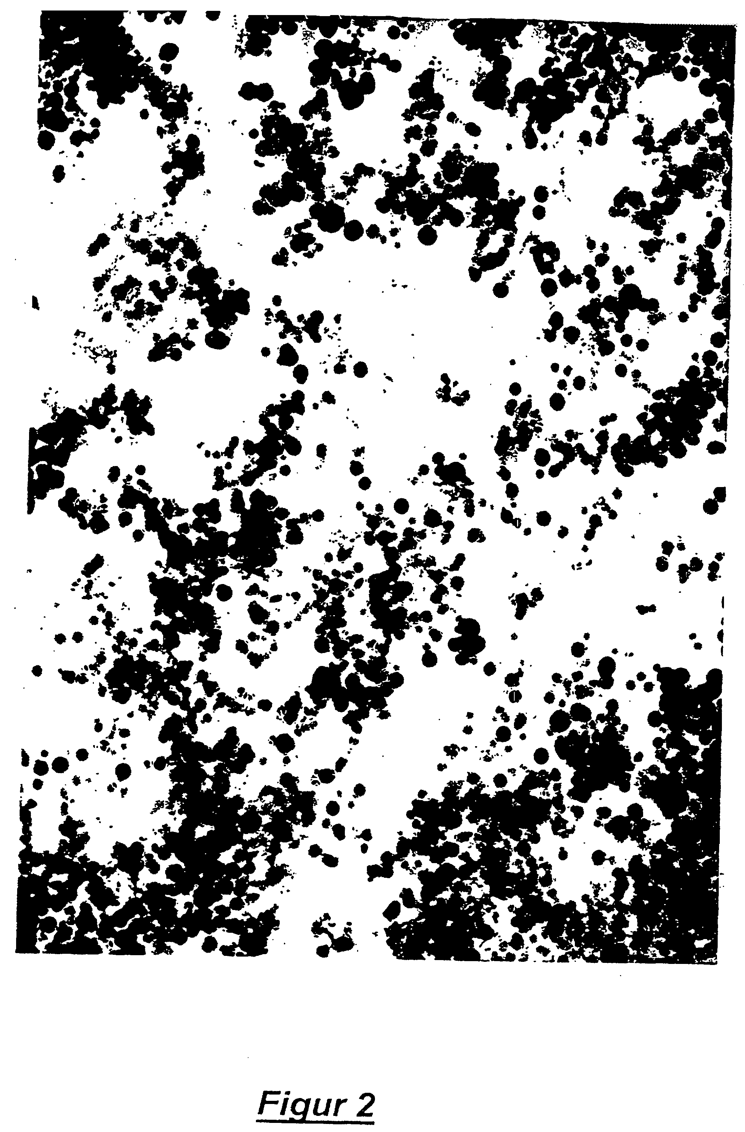

Figur 2 zeigt eine EM-Aufnahme der mittels Aerosol mit Aluminiumoxid dotierten pyrogenen Kieselsäure gemäß Beispiel 1.

Auffällig ist, daß viele einzelne sphärische Primärpartikel, die nicht miteinander verwachsen sind, vorliegen.

Der Unterschied der erfindungsgemäß mittels Aerosol mit Aluminiumoxid dotierten pyrogenen Kieselsäuren zu pyrogenen Kieselsäuren bekannter Herstellung und gleicher spezifischer Oberfläche zeigt sich insbesondere in der DBP-Absorption, die ein Maß für die Strukturierung der pyrogenen Kieselsäure (d.h. für deren Verwachsungsgrad) darstellt.

So weist die nach dem pyrogenen Hochtemperaturflammenhydrolyseverfahren hergestellte kommerziell erhältliche Kieselsäure OX 50 (bei einer BET-Oberfläche von 50 m²/g) eine DBP-Absorption von ca. 160 (g/100g) auf, während die erfindungsgemäße mit 0,187 Gew.% Al₂O₃-dotierte pyrogene Kieselsäure nur eine DBP-Absorption von 81 (g/100g) hat. Die sehr niedrige DBP-Absorption hat zur Folge, daß sich aus der erfindungsgemäßen mit Aluminiumoxid dotierten pyrogenen Kieselsäure Dispersionen niedriger Viskosität herstellen lassen. Dispersionen mit einem hohen Füllgrad an Feststoff sind aufgrund dieser Eigenschaften einfach herzustellen.

Hervorzuheben ist weiterhin die hervorragende Dispergierbarkeit und Einarbeitbarkeit der erfindungsgemäßen Kieselsäure.

Besonders bei der Anwendung als absorbierender Füllstoff bei der Papierherstellung, worunter auch die Verwendung in Ink-Jet-Papier und Ink-Jet-Folie zu verstehen ist, ist dies von Vorteil.

Weiterhin lassen sich aus den Dispersionen der erfindungsgemäßen Kieselsäuren transparente und glänzende Beschichtungen herstellen.

Der Unterschied im Einarbeitungsverhalten und in der Viskosität wird in der Tabelle 3 dargestellt.

Zum Vergleich werden die folgenden, kommerziell erhältlichen pyrogenen Oxide und Mischoxide herangezogen (alle Produkte von Fa. Degussa/Frankfurt): Aerosil 200 (pyrogen hergestellte Kieselsäure), MOX 170 (pyrogen hergestelltes Aluminium-Silicium-Mischoxid), Aluminiumoxid C (pyrogen hergestelltes Aluminiumoxid).

**Tabelle 3**

| **Name** | **Aerosil A 200** | **MOX 170** | **Alu C** | **Beispiel 1** | **Beispiel 2** |
|---|---|---|---|---|---|
| SiO₂-Gehalt [Gew.%] | >99,8 | >98,3 | <0,1 | 99,79 | 99,67 |
| Al₂O₃ [Gew.%] | <0,05 | 0,8 | >99,6 | 0,187 | 0,27 |
| BET [m²/g] | 200 | 170 | 100 | 55 | 203 |
| DBP-Absorption [g/100 g] | 330 | 332 | 230 | 81 | 325 |
| Einarbeitbarkeit [₋₋] | mittel bis aufwendig | mittel | mittel | sehr gut | mittel |

| Viskosität [mPas] | | | | | |
|---|---|---|---|---|---|
| bei 5 Upm | 4560 | 880 | 560 | 400 | 14480 |
| bei 100 Upm | 1200 | 420 | 330 | 210 | 2570 |

| BET | | | | | |
|---|---|---|---|---|---|
| vor Sintern und | 200 | 170 | | 55 | 203 |
| nach 3 h Sintern bei 1150°C [m²/g] | 17 | 43 | | 50 | 125 |

| Schüttdichte | | | | | |
|---|---|---|---|---|---|
| vor Sintern und | 40 | 40 | | 73 | 17 |
| nach 3 h Sintern bei 1150°C [g/l] | 160 | 220 | | 80 | 26 |

Die Einarbeitbarkeit bezieht sich auf die Geschwindigkeit mit der sich das Pulver in eine vorgegebene Flüssigkeit einrühren läßt.

Im Vergleich zu dem bekannten pyrogen hergestellten Mischoxid MOX 170, welches >98,3 Gew.% Siliciumdioxid und 0,8 Gew.% Al₂O₃ enthält und mittels der Flammenhydrolyse eines Gemisches aus AlCl₃ und SiCl₄ hergestellt wird, weist das erfindungsgemäße mittels Aerosol dotierte pyrogen hergestellte Siliciumdioxid eine deutlich herabgesetzte Sinteraktivität auf.

Wie der Tabelle 3 entnommen werden kann, sintern die bekannten pyrogen hergestellten Oxide, wie Aerosil 200 (Siliciumdioxid) und MOX 170 (Al₂O₃/SiO₂-Mischoxid), unter deutlicher Erhöhung des Schüttgewichtes zusammen, wobei gleichzeitig die BET-Oberfläche stark zurückgeht. deutlicher Erhöhung des Schüttgewichtes zusammen, wobei gleichzeitig die BET-Oberfläche stark zurückgeht.

Die erfindungsgemäßen mittels Aerosol dotierten pyrogen hergestellten Siliciumdioxide weisen nach der Sinterung dagegen nur eine geringfügige Veränderung des Schüttgewichtes auf. Das bedeutet, daß die erfindungsgemäßen Siliciumdioxide deutlich in ihrer Sinteraktivität herabgesetzt sind.

Die Bestimmung der Viskosität erfolgte an einer - bezogen auf den Feststoffgehalt 15-prozentigen- wäßrigen Dispersion. Der Feststoff setzt sich dabei aus folgenden Teilen zusammen:

50 Massenteile der pyrogenen Kieselsäure sowie 30 Massenteile von Mowiol 28-99 (Polyvinylalkohol, Firma Cassella-Höchst) und 50 Massenteile Lumiten PPR 8450 (Polyvinylpyrrolidon, Firma BASF).

Die 15-prozentige wäßrige Suspension wird mit einem Dissolver 30 min bei 3000 U/min gerührt, danach 24 Stunden stehen gelassen, dann kurz mit der Hand aufgerührt und bei 23 °C mit einem Brookfield-Viskosimeter (Typ RVT) gemessen, wobei die Spindelgröße der jeweiligen Viskosität angepaßt wird.

### Beurteilung des Druckverhaltens:

Mit dieser 15-prozentigen Dispersion wird nach 10 Tagen (nach kurzem Aufschütteln) eine kommerziell erhältliche Folie (Fa. Kimoto 105 g/m²) mit einem Rakel Nr. 4 bestrichen und mit einem Hewlett Packard-Drucker 550 C bedruckt. Die Bewertung der Druckqualität erfolgt visuell. (Beste Note = 1, schlechteste Note = 6)

Die Ergebnisse für einen Dreifarbendruck und einen Vierfarbendruck sind in den Tabellen 4 und 5 aufgeführt.

**Tabelle 4**

| Dreifarbdruck (All Colour)HP 550 C | | | | | |
|---|---|---|---|---|---|
| **Name** | **Aerosil A 200** | **MOX 170** | **Alu C** | **Beispiel 1** | **Beispiel 2** |
| **Farbintensität** | | | | | |
| M/G/C | 1 | 1 | 1 | 1 | 1 |
| schwarz | 1 | 1 | 1 | 1 | 1,75 |

| **Punktschärfe** | | | | | |
|---|---|---|---|---|---|
| Schwarz in Farbe | 1,5 | 1,75 | 1,75 | 1,75 | 1,5 |

| **Übergänge** | | | | | |
|---|---|---|---|---|---|
| Farbe in Farbe | 1 | 1 | 1 | 1 | 1 |

| **Punktschärfe** | | | | | |
|---|---|---|---|---|---|
| Schwarzdruck | 1 | 1 | 1 | 1 | 1,75 |

| **Punktschärfe** | | | | | |
|---|---|---|---|---|---|
| Schwarzkonturen | 1,5 | 1,5 | 1 | 1 | 1,5 |

| **Halbtondruck** | | | | | |
|---|---|---|---|---|---|
| Farbintensität/Konturen | 1 | 1 | 1,75 | 1,5 | 1 |
| **Summe** | 8 | 8,25 | 8,5 | 8,25 | 8,5 |
| Bewertung | | | | | |
| **Durchschnitt** | **1,14** | **1,17** | **1,21** | **1,17** | **1,21** |
| Bewertung | | | | | |
| M/G/C: Magenta, Grün, Cyan | | | | | |

**Tabelle 5**

| Vierfarbdruck (Black and Colour)HP 550 C | | | | | |
|---|---|---|---|---|---|
| **Name** | **Aerosil A 200** | **MOX 170** | **Alu C** | **Beispiel 1** | **Beispiel 2** |
| **Farbintensität** | | | | | |
| M/G/C | 1 | 1 | 1 | 1 | 1 |
| schwarz | 1 | 1 | 1 | 1 | 1 |

| **Punktschärfe** | | | | | |
|---|---|---|---|---|---|
| Schwarz in Farbe | 3,5 | 3,5 | 1,5 | 3 | 3,5 |

| **Übergänge** | | | | | |
|---|---|---|---|---|---|
| Farbe in Farbe | 1 | 1 | 1 | 1 | 1 |

| **Punktschärfe** | | | | | |
|---|---|---|---|---|---|
| Schwarzdruck | 1 | 1 | 1 | 1 | 1 |

| **Punktschärfe** | | | | | |
|---|---|---|---|---|---|
| Schwarzkonturen | 1,5 | 1,75 | 1,75 | 2 | 1,75 |

| **Halbtondruck** | | | | | |
|---|---|---|---|---|---|
| Farbintensität/Konturen | | | | | |
| | 1,5 | 1,5 | 1,5 | 1,5 | 1,5 |
| **Summe** | 10,5 | 10,75 | 9,5 | 10,5 | 9,75 |
| Bewertung | | | | | |
| **Durchschnitt** | **1,5** | **1,5** | **1,4** | **1,5** | **1,4** |
| Bewertung | | | | | |

Grundsätzlich sind auch Abmischungen der erfindungsgemäßen Kieselsäuren mit anderen pyrogen hergestellten oder gefällten Kieselsäuren oder Bentoniten oder anderen in der Papierindustrie üblichen Füllstoffen möglich.

## Patentansprüche

1. Mittels Aerosol mit Aluminiumoxid dotierte pyrogen hergestellte Kieselsäure,
**dadurch gekennzeichnet,**
**daß** die Basiskomponente eine pyrogen nach der Art der Flammenoxidation oder der Flammenhydrolyse hergestellte Kieselsäure ist, die mit einer Dotierungskomponente von 1·10⁻⁴ und bis 20 Gew.% dotiert wurde, wobei die Dotierungsmenge im Bereich von 1 bis 10.000 ppm liegt und die Dotierungskomponente ein Salz oder eine Salzmischung des Aluminiums oder eine Suspension einer Aluminiumverbindung oder metallischen Aluminiums oder Mischungen davon ist, wobei die BET-Oberfläche des dotierten Oxids zwischen 5 und 600 m²/g liegt.

2. Verfahren zur Herstellung der mittels Aerosol mit Aluminiumoxid dotierten pyrogen hergestellten Kieselsäure gemäß Anspruch 1,
**dadurch gekennzeichnet,**
**daß** man in eine Flamme, wie sie zur pyrogenen Herstellung von Kieselsäure nach der Art der Flammenoxidation oder der Flammenhydrolyse benutzt wird, ein Aerosol einspeist, das Aerosol vor der Reaktion mit dem Gasgemisch der Flammenoxidation beziehungsweise Flammenhydrolyse homogen mischt, dann das Aerosol-Gasgemisch in der Flamme abreagieren läßt und die entstandenen mit Aluminiumoxid dotierten pyrogen hergestellten Kieselsäuren in bekannter Weise vom Gasstrom abtrennt, wobei zur Herstellung des Aerosols eine wäßrige Lösung dient, die Salze oder Salzmischungen des Aluminiums oder das Metall selbst in gelöster oder suspendierter Form oder Mischungen davon enthält, wobei das Aerosol durch Vernebelung mittels einer Zweistoffdüse oder durch eine andere Art der Aerosolherstellung hergestellt wird.

3. Verwendung der mittels Aerosol mit Aluminiumoxid dotierten pyrogen hergestellten Kieselsäure als Füllstoff in der Papierindustrie bei der Herstellung von Ink-Jet-Papier und Ink-Jet-Folie oder sonstigen Ink-Jet-Materialien.

4. Abmischungen von 0,01 bis 100 Prozent der Kieselsäuren nach Anspruch 1 mit anderen pyrogen hergestellten oder gefällten Kieselsäuren oder Bentoniten oder anderen in der Papierindustrie üblichen Füllstoffen oder Mischungen dieser Füllstoffe.

## Claims

1. A pyrogenically produced silica doped with aluminium oxide by means of an aerosol,
**characterised in that**
the basic component is a silica produced pyrogenically using a flame oxidation method or flame hydrolysis method, which component has been doped with a doping component of 1·10⁻⁴ and up to 20 wt.%, wherein the doping quantity is preferably in the range from 1 to 10000 ppm and the doping component is a salt or mixture of salts of aluminium or a suspension of an aluminium compound or metallic aluminium or mixtures thereof, wherein the BET surface area of the doped oxide is between 5 and 600 m²/g.

2. A process for the production of the pyrogenically produced silica doped with aluminium oxide by means of an aerosol according to claim 1,
**characterised in that**
an aerosol is introduced into a flame, as is used for the pyrogenic production of silica by the flame oxidation method or flame hydrolysis method, the aerosol is homogeneously mixed with the flame oxidation or flame hydrolysis gas mixture before the reaction, then the aerosol/gas mixture is allowed to react in the flame and the resultant pyrogenically produced silicas doped with aluminium oxide are separated from the gas stream in a known manner, wherein the aerosol is produced using an aqueous solution which contains salts or mixtures of salts of aluminium or the metal itself in dissolved or suspended form or mixtures thereof, wherein the aerosol is produced by atomisation by means of a two-fluid nozzle or by another aerosol production method.

3. Use of the pyrogenically produced silica doped with aluminium oxide by means of an aerosol as a filler in the paper industry for the production of inkjet paper and inkjet film or other inkjet materials.

4. Blends of 0.01 to 100% of the silicas according to claim 1 with other pyrogenically produced or precipitated silicas or bentonites or other fillers conventional in the paper industry or mixtures of these fillers.

## Revendications

1. Acide silicique fabriqué par pyrogénation et dopé d'oxyde d'aluminium par l'intermédiaire d'un aérosol,
**caractérisé en ce que**
le composant de base est un acide silicique fabriqué par une pyrogénation du genre oxydation à la flamme on hydrolyse à la flamme et qui a été dopé d'un composant de dopage entre 1x10⁻⁴ et 20 % en poids avec une plage de dopage allant de 1 à 10.000 ppm, le composant de dopage étant un sel ou un mélange de sels d'aluminium ou une suspension d'un composé d'aluminium, d'aluminium métallique ou d'un mélange de ces derniers, la surface BET de l'oxyde dopé étant comprise entre 5 et 600 m²/g.

2. Procédé pour la fabrication de l'acide silicique pyrogéné dopé d'oxyde d'aluminium par l'intermédiaire d'un aérosol selon la revendication 1,
**caractérisé en ce que**
dans une flamme telle que celle utilisée pour fabriquer par une pyrogénation du genre oxydation ou hydrolyse à la flamme on injecte un aérosol qui avant la réaction se mélange de manière homogène avec le mélange gazeux qu'il s'agit d'oxyder ou d'hydrolyser à la flamme, on laisse alors réagir l'aérosol et le mélange gazeux dans la flamme et les acides siliciques pyrogénés et dopés d'oxyde d'aluminium qui se forment alors sont séparés de manière connue du courant gazeux, étant précisé que pour fabriquer l'aérosol on utilise une solution aqueuse qui contient en solution ou en suspension des sels ou des mélanges de sels d'aluminium ou l'aluminium lui-même ou des mélanges de ceux-ci, l'aérosol étant produit par nébulisation au moyen d'une tuyère à deux matières ou par un autre mode de fabrication d'aérosol.

3. Utilisation dans l'industrie du papier de l'acide silicique pyrogéné et dopé d'oxyde d'aluminium comme charge dans la fabrication de papier de feuilles ou d'autres matériaux pour recevoir une impression ou jet d'encre.

4. Mélanges contenant 0,01 à 100 % d'acide silicique selon la revendication 1, avec d'autres acides siliciques fabriqués par pyrogénation ou précipitation, ou avec des bentonites ou autres charges usuelles dans l'industrie du papier, ou mélanges de ces charges.
